(19) **Europäisches Patentamt / European Patent Office / Office européen des brevets**

(11) **EP 4 609 578 B1**

(12) **FASCICULE DE BREVET EUROPEEN**

(45) Date de publication et mention
de la délivrance du brevet:
**27.05.2026 Bulletin 2026/22**

(21) Numéro de dépôt: **23790364.6**

(22) Date de dépôt: **20.10.2023**

(51) Classification Internationale des Brevets (IPC):
*H04L 41/16* (2022.01)   *H04L 1/00* (2006.01)
*H04L 41/142* (2022.01)   *H04L 25/02* (2006.01)

(52) Classification Coopérative des Brevets (CPC):
**H04L 41/142; H04L 25/0212; H04L 25/0224;
H04L 25/0254;** H04L 1/0026

(86) Numéro de dépôt international:
**PCT/EP2023/079381**

(87) Numéro de publication internationale:
**WO 2024/088919 (02.05.2024 Gazette 2024/18)**

(54) **ESTIMATION DE PARAMÈTRES STATISTIQUES D'UN CANAL DE RICE EN PRÉSENCE DE MASQUAGE BASÉE SUR DU DEEP LEARNING**

SCHÄTZUNG STATISTISCHER PARAMETER EINES RICIAN-KANALS IN GEGENWART VON MASKIERUNG AUF BASIS VON TIEFENLERNEN

ESTIMATING STATISTICAL PARAMETERS OF A RICIAN CHANNEL IN THE PRESENCE OF MASKING BASED ON DEEP LEARNING

(84) Etats contractants désignés:
**AL AT BE BG CH CY CZ DE DK EE ES FI FR GB
GR HR HU IE IS IT LI LT LU LV MC ME MK MT NL
NO PL PT RO RS SE SI SK SM TR**

(30) Priorité: **27.10.2022 FR 2211185**

(43) Date de publication de la demande:
**03.09.2025 Bulletin 2025/36**

(73) Titulaire: **THALES
92190 Meudon (FR)**

(72) Inventeurs:
• **LETURC, Xavier
92622 GENNEVILLIERS Cedex (FR)**
• **LE MARTRET, Christophe
92622 GENNEVILLIERS Cedex (FR)**

(74) Mandataire: **Atout PI Laplace
Immeuble Up On
25 Boulevard Romain Rolland
CS 40072
75685 Paris Cedex 14 (FR)**

(56) Documents cités:
**WO-A1-01/59963**

• **C. TEPEDELENLIOGLU ET AL: "The ricean K
factor: Estimation and performance analysis",
IEEE TRANSACTIONS ON WIRELESS
COMMUNICATIONS, vol. 24, no. 5, 1 May 2003
(2003-05-01), US, pages 799 - 810, XP055506568,
ISSN: 1536-1276, DOI: 10.1109/TWC.2003.814338**

EP 4 609 578 B1

## Description

Domaine technique

La présente invention concerne le domaine des communications sans fil. Plus précisément, l'invention concerne l'estimation de paramètres statistiques d'un canal de propagation afin de réaliser une estimation de statistiques d'un canal de propagation.

Technique antérieure

Pour certains réseaux de communication sans fil, il n'existe pas de voie de retour rapide permettant d'obtenir une estimation fiable d'une réponse impulsionnelle instantanée d'un canal de propagation au niveau d'un nœud émetteur. Dans ce contexte, une allocation de ressources optimale adaptée aux conditions de propagation se base généralement sur les statistiques du canal de propagation.

Un modèle statistique de canal de propagation fréquemment utilisé est le canal de Rice. La modélisation conventionnelle d'un canal de Rice consiste à écrire chaque coefficient de la réponse impulsionnelle du canal de propagation comme la somme d'un terme déterministe, la Ligne de Vue (ci-après référencée LdV) et d'un terme aléatoire suivant une loi complexe normal centrée (composante de Rayleigh) correspondant à la composante non ligne de vue dite non-Ldv. Un tel canal de propagation est notamment illustré dans le document « A new simple model for land mobile satellite channels: first- and second-order statistics," de A. Abdi, W. C. Lau, M. -. Alouini and M. Kaveh, publié dans IEEE Transactions on Wireless Communications, vol. 2, no. 3, pp. 519-528, May 2003. », dit document Abdi et al. Ce modèle statistique représente bien la distribution d'une amplitude du canal de propagation lorsqu'il existe une Ligne de Vue directe entre le nœud émetteur et un nœud récepteur. Dans le modèle du document Abdi et al., la composante LdV n'est plus déterministe mais est elle-même soumis à des fluctuations aléatoires suivant une loi de Nakagami-m. Un indicateur important de la qualité du lien de communications est fourni par un facteur, dit facteur K de Rice. Ce facteur K correspond à un rapport de puissance entre la composante LdV et la composante non-Ligne de vue entre ledit naeud émetteur et ledit nœud récepteur. Ce modèle statistique de canal de propagation englobe le canal de Rayleigh lorsque K = 0 et le canal AWGN (pour « Additive White Gaussian Noise » en anglais) lorsque $K \rightarrow +\infty$ comme cas particuliers. Ainsi plus le facteur K est élevé, meilleur est le lien entre le nœud émetteur et le nœud récepteur. Une solution d'estimation du facteur K de Rice a été proposée dans C. Tepedelenlioglu ET AL: "The ricean K factor: Estimation and performance analysis", IEEE Transactions on Wireless Communications, vol. 24, no. 5, 1 mai 2003 (2003-05-01).

La connaissance du facteur K ainsi que de l'affaiblissement de la puissance reçue par rapport à la puissance d'émission liée à la distance entre le nœud émetteur et le nœud récepteur (appelé « Pathloss » en anglais) permet de réaliser une allocation de ressources adaptée aux conditions de propagation. L'estimation du facteur K peut être rendue plus complexe en présence de masquage, ce masquage étant dû à l'apparition d'obstacles entre le nœud émetteur et le nœud récepteur. Ces obstacles engendrent des fluctuations aléatoires de la valeur de la composante en LdV. Un tel phénomène est connu sous le nom de « shadowing » en anglais. Le document Abdi et al décrit, par exemple, un canal de Rice avec un « shadowing » de type Nakagami-m.

Il existe dans la littérature de nombreux procédés d'estimation du facteur K de Rice en l'absence de « shadowing ». Un nombre relativement limité de documents traite de l'estimation du facteur K en présence de « shadowing ». Parmi ces documents, on distingue le brevet CN106850109B, le document « Estimation of Rician K-Factor in the Presence of Nakagamim Shadowing for the LoS Component de G. Giunta, C. Hao and D. Orlando dans IEEE Wireless Communications Letters, vol. 7, no. 4, pp. 550-553, Aug. 2018 » dit document Giunta et al. et le document « Estimation of the Ricean $K$ Factor in the Presence of Shadowing, de X. Leturc, P. Ciblat and C. J. Le Martret dans IEEE Communications Letters, vol. 24, no. 1, pp. 108-112, Jan. 2020 », dit document Leturc et al. Ces différents documents cherchent à améliorer l'estimation du facteur K de Rice du modèle de canal de propagation décrit dans le document Abdi et al. Ces documents décrivent ainsi des méthodes statistiques conventionnelles afin d'estimer le facteur K de Rice en présence de « shadowing », telles que la méthode des moments dans le brevet CN106850109B variance d'estimation de la méthode est élevée, ce qui est préjudiciable lors de l'utilisation de l'estimation du facteur $K$ dans le cadre d'une allocation de ressources adaptée.

Les performances de la méthode EM sont meilleures que celle de la méthode des moments, mais cette méthode est difficile à implémenter dans un système embarqué car il s'agit d'une méthode itérative dont la convergence n'est pas maîtrisée et est potentiellement longue (plusieurs centaines d'itérations). De plus, dans cette méthode EM, chaque itération fait intervenir des fonctions mathématiques spéciales, par exemple une fonction parabolique cylindrique, pour lesquelles une implémentation embarquée est couteuse. En outre, comme il est montré dans le document Leturc et al. l'estimateur au sens du maximum de vraisemblance sur le modèle de canal de propagation du document Abdi et al. n'est pas implémentable avec une complexité raisonnable du fait de la complexité mathématique de ce modèle de canal.

Le brevet EP3503649 décrit un procédé et un dispositif pour calculer des paramètres statistiques d'un canal de propagation. Ce procédé comprend plusieurs étapes exécutées par un processeur d'un lien de communication dans le canal de propagation. Ainsi, à partir d'une séquence d'apprentissage contenue dans le signal de communication reçu par un nœud récepteur, le processeur du lien de communication estime le canal de propagation, puis la statistique de ce canal. Ces informations sont transmises à un allocateur de ressources afin de réaliser une allocation des ressources. Lors d'une dernière étape, le gestionnaire de ressources va procéder à l'allocation des ressources pour une prochaine émission. Ces ressources allouées sont, par exemple, la puissance, le schéma de modulation et de codage. L'allocation optimisée des ressources aux différents nœuds du réseau de communication va permettre de maximiser les performances de ce réseau, et ceci de manière dynamique afin de pouvoir adapter le réseau en permanence aux conditions de propagation qui évoluent suivant la mobilité des nœuds. Cette allocation optimisée des ressources trouvent une application particulière pour des nœuds d'un système embarqué pour lesquels les conditions de propagation évoluent.

Le brevet EP3503649 décrit ainsi l'estimation d'un facteur $K$ de Rice uniquement en l'absence de « shadowing ». Il décrit également le « tracking » du facteur $K$ en se basant sur des outils provenant d'une détection de rupture.

Le document « Rician K-Factor Estimation Using Deep Learning de M. Alymani, M. H. Alhazmi, A. Almarhabi, H. Alhazmi, A. Samarkandi and Y. -D. Yao dans 2020 29th Wireless and Optical Communications Conference (WOCC) » dit document Alymani et al. , le document « CNN Based Rician K factor estimation for non-stationary industrial fading channel de G. Lu, Q. Zhang, X. Zhang, F. Shen and F. Qin dans 2018 IEEE Global Conference on Signal and Information Processing (GlobalSIP) » dit document Lu et al. et le document « Ricean K-factor Estimation based on Channel Quality Indicator in OFDM Systems using Neural Network de Kun Wang publié en 2018 et disponible sur arxiv » dit document Wang, traitent de l'estimation du facteur K de Rice en utilisant des outils provenant du « deep learning ». Cependant, ces publications présentent des limites dans leur approche.

En premier lieu, ces documents se placent dans un contexte sans « shadowing ». Ensuite, tous ces documents utilisent des outils de classification sur le facteur K de Rice donc la granularité d'estimation est fixée par une grille des valeurs autorisées pour la classification. Par exemple dans le document Wang, les classes considérées vont de 1 à 11 par pas de 1, or il peut être intéressant d'être en mesure d'estimer des valeurs du facteur $K$ intermédiaires, en effet les performances entre $K = 1$, $K = 1,5$ et $K = 2$ sont différentes. De plus, les trois documents décrivent des architectures de réseaux de neurones conventionnelles issues de la littérature sans chercher à les adapter aux spécificités du problème d'estimation considéré. En outre, ces approches supposent toutes que le nombre d'échantillons en entrée d'une architecture de réseau de neurones est identique d'un scénario à l'autre, ce qui n'est pas forcément le cas en pratique. Enfin, le document Wang décrit une architecture de type « perceptron totalement connecté » qui est peu complexe, mais cette architecture peut être considérée comme inefficiente dans certains cas, car elle ne prend pas en compte une invariance par permutation des données d'entrées.

Il existe donc un besoin de proposer un procédé d'estimation de statistiques d'un canal de propagation dans un réseau de communication en présence de « shadowing », basé sur l'estimation du facteur $K$ du canal de Rice et ceci à partir d'outils issus du « deep learning » dont la complexité est maîtrisée.

Exposé de l'invention

La présente invention vise à remédier au moins en partie à ce besoin.

Plus particulièrement, la présente invention a pour objectif de réduire la complexité des techniques basées sur des méthodes statistiques conventionnelles.

Cette invention couvre ainsi un procédé d'estimation de statistiques d'un canal de propagation, ledit canal de propagation permettant une transmission d'un signal de communication entre un nœud émetteur et un nœud récepteur, ledit canal de propagation étant un canal de Rice en présence de masquage, ledit signal de communication comprenant une séquence d'apprentissage, ledit procédé d'estimation comportant :

- une étape de détermination d'un ensemble de $N$ estimations, du canal de propagation à partir de ladite séquence d'apprentissage transmise $N$ fois par le nœud émetteur; ;
- une étape de pré-traitement dudit ensemble des estimations pour obtenir des données intermédiaires ;
- une étape de traitement des données intermédiaires pour obtenir des données intermédiaires traitées, ladite étape de traitement étant apte à prendre en compte une invariance par permutation desdites données intermédiaires, quel que soit $N$ ;
- une étape de détermination de paramètres statistiques à partir des données intermédiaires traitées ;

ladite étape de traitement des données intermédiaires et ladite étape de détermination des paramètres statistiques étant réalisées par une architecture d'au moins un réseau de neurones.

L'invention permet ainsi de fournir un procédé d'estimation de statistiques d'un canal de propagation qui soit simple et pratique en comparaison des techniques basées sur des méthodes statistiques conventionnelles. Ce procédé d'estimation se base sur l'estimation de paramètres statistiques, tels que le facteur $K$ de Rice, en présence notamment de « shadowing ». En outre, contrairement à l'art antérieur, il est envisagé dans cette invention d'effectuer une régression plutôt qu'une classification améliorée. Enfin, l'invention prend en compte une invariance par permutation du problème d'estimation considéré pour la conception de l'architecture d'au moins un réseau de neurones. Ceci permet d'accélérer drastiquement une convergence lors de l'apprentissage du ou des réseau(x) de neurones de l'architecture et permet d'améliorer la capacité de généralisation de cette architecture.

Dans un mode de réalisation particulier, l'étape de traitement des données intermédiaires comprend :

- une étape de traitement par un premier réseau de neurones ayant une entrée et $S$ sorties, ledit premier réseau de neurones étant apte à recevoir en entrée des données intermédiaires obtenues à partir d'une partie réelle et d'une partie imaginaire de chaque estimation du canal de propagation et à fournir en sortie $2N$ vecteurs de $S$ entrées ;
- une étape de sommation des $2N$ vecteurs de $S$ entrées, ladite sommation étant commutative et applicable pour tout $N$.

Dans un mode de réalisation particulier, le pré-traitement est une normalisation de l'ensemble des $N$ estimations.

Dans un mode de réalisation particulier, le procédé d'estimation comprend une étape de détermination d'informations statistiques à partir de l'ensemble des $N$ estimations, lesdites informations statistiques étant destinées à être transmises à l'architecture.

L'invention permet ainsi l'insertion d'informations statistiques supplémentaires en entrée de l'architecture.

Dans un mode de réalisation particulier, l'étape de détermination d'informations statistiques comprend une estimation d'un facteur $K$ du canal de propagation.

Dans un mode de réalisation particulier, le procédé d'estimation comprend une étape de détermination d'une variance du bruit d'estimation, ladite variance du bruit d'estimation étant destinée à être transmise à l'architecture, ladite variance du bruit étant associée au nombre $N$ d'estimations ou à la racine carré dudit nombre N.

Dans un mode de réalisation particulier, l'architecture comprend quatre réseaux de neurones.

Dans un mode de réalisation particulier, l'architecture est préalablement entraînée au cours d'une étape d'entraînement, ladite étape d'entraînement comprenant une première étape de pré-conditionnement sur des données de synthèse et une seconde étape d'ajustement sur des données issues d'au moins une campagne de mesures.

L'objectif de la première étape est de préconditionner l'architecture et plus particulièrement le premier réseau de neurones afin de démarrer l'apprentissage sur des données réelles avec des poids le plus proche possibles des poids optimaux, en vue d'avoir une pénalisation limitée par la taille réduite des bases de données issues de campagnes de mesures. La seconde étape permet un ajustement de ces poids les plus proches. Cette procédure d'entraînement en deux temps permet d'optimiser l'estimation des statistiques du canal de propagation.

Dans un mode de réalisation particulier, le canal de propagation est un canal plat en fréquence.

Dans un mode de réalisation particulier, le canal de propagation est un canal sélectif en fréquence.

Un autre objet de l'invention concerne un dispositif d'estimation de statistiques dans un réseau de communication pour la mise en œuvre d'un procédé d'estimation de statistiques d'un canal de propagation selon un objet de l'invention, ledit canal de propagation permettant une transmission d'un signal de communication entre un nœud émetteur et un nœud récepteur, ledit canal de propagation étant un canal de type canal de Rice en présence de masquage.

Le dispositif d'estimation ainsi proposé est bien adapté au problème traité, contrairement aux approches de l'art antérieur qui utilisent des architectures conventionnelles sans adaptations. Le dispositif de l'invention est aussi bien adapté pour estimer les paramètres statistiques du canal de propagation, avec la possibilité d'inclure des informations statistiques supplémentaires par rapport aux échantillons de canal.

La présente invention sera mieux comprise à la lecture de la description détaillée de modes de réalisation pris à titre d'exemples nullement limitatifs et illustrés par les dessins annexés sur lesquels :

[Fig 1] la figure 1 illustre un réseau de communication entre un nœud émetteur et un nœud récepteur avec un allocateur de ressources ;

[Fig 2] la figure 2 illustre les différentes étapes d'un procédé d'estimation de statistiques d'un canal de propagation selon l'invention ;

[Fig 3] la figure 3 représente un dispositif pour l'estimation de statistiques pour la mise en œuvre du procédé de la figure 2.

L'invention n'est pas limitée aux modes de réalisation et variantes présentées et d'autres modes de réalisation et variantes apparaîtront clairement à l'homme du métier.

Dans la description qui va suivre, on adopte la norme dans laquelle les vecteurs sont référencés en gras par rapport aux scalaires.

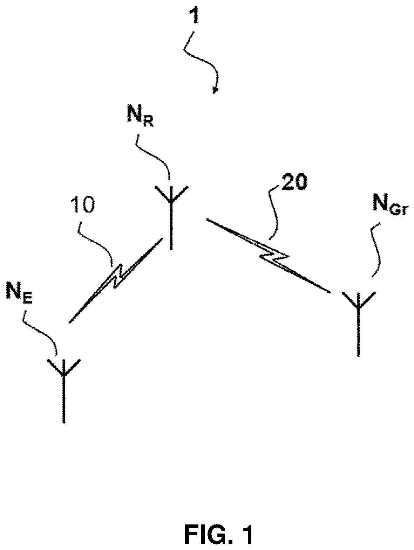

La figure 1 illustre un réseau de communication 1 avec allocateur de ressources.

Ce réseau de communication 1 comprend un nœud émetteur $N_E$, un nœud récepteur $N_R$, et un terminal $N_{GR}$ ayant une fonction de gestionnaire de ressources.

Le nœud émetteur $N_E$ et le nœud récepteur $N_R$ communiquent via un canal de propagation 10 de type canal de Rice. Le nœud récepteur $N_R$ communique avec le terminal $N_{GR}$ via un autre canal de propagation 20.

Le nœud émetteur $N_E$ est adapté pour transmettre $N$ séquences d'apprentissage SA au nœud récepteur $N_R$. Le nœud récepteur $N_R$ est apte à estimer le canal de propagation 10. Ces statistiques sont ensuite transmises au terminal $N_{GR}$ pour qu'il détermine une allocation de ressources. L'allocation de ressource consiste à, par exemple, déterminer une puissance d'émission étant donné la connaissance des statistiques du canal de propagation 10. Dans un autre mode de réalisation, le nœud récepteur $N_R$ et le terminal $N_{GR}$ sont confondus.

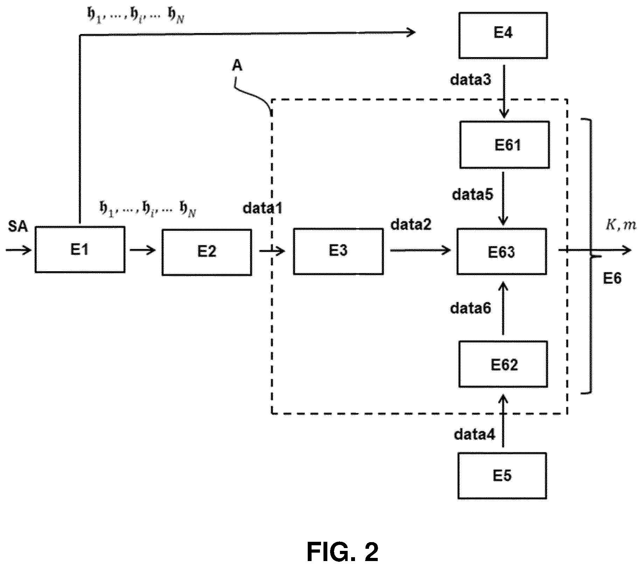

Le procédé d'estimation de statistiques du canal de propagation 10 est décrit à la figure 2. Il comprend :

- une étape E1 de détermination d'un ensemble de $N$ estimations ($\mathfrak{h}_1, ..., \mathfrak{h}_i, ... \mathfrak{h}_N$) ;
- une étape E2 de pré-traitement de l'ensemble des $N$ estimations ($\mathfrak{h}_1, ..., \mathfrak{h}_i, ... \mathfrak{h}_N$) ;
- une étape E3 de traitement de données intermédiaires ;
- une étape E4 de détermination d'informations statistiques ;
- une étape E5 de détermination d'une variance du bruit d'estimation ;
- une étape E6 de détermination de paramètres statistiques $K, m$ ;

L'étape E1 est adaptée pour déterminer l'ensemble de $N$ estimations $\mathfrak{h}_1, ..., \mathfrak{h}_i, ... \mathfrak{h}_N$ du canal de propagation à partir des séquences d'apprentissage.

Dans le cas d'un canal plat en fréquence, la réponse impulsionnelle du canal de propagation est constituée à chaque instant $i$ d'un seul coefficient complexe aléatoire $h_i$ qui peut s'écrire selon ce modèle :

$$h_i = a c_i e^{j\theta_0} + R_i$$

où $a c_i e^{i\theta 0}$ correspond à une partie LdV et $R_i$ correspond à une partie nLdV. Plus précisément, $a$ correspond à l'amplitude de la composante LdV, $c_i$ est une variable aléatoire qui suit une loi de Nakagami-m et qui représente le « shadowing » de la composante LdV, $\theta_0$ est la phase de la composante LdV, et $R_i \sim \mathcal{CN}(0, 2\sigma_h^2)$ où $\mathcal{CN}(0, 2\sigma_h^2)$ correspond à la loi normale centrée et de variance $2\sigma_h^2$. La densité de probabilité de $c_i$ peut s'écrire comme suit :

$$f_{c_i}(x) = \frac{2m^m}{\Gamma(m)} x^{2m-1} e^{-mx^2}, \quad \forall x \geq 0.$$

On suppose que le « shadowing » et la composante nLdV varient indépendamment d'un instant de mesure à l'autre, c'est-à-dire $\forall i \neq j$ $c_i$ et $c_j$ sont indépendantes et identiquement distribuées, tout comme $R_i$ et $R_j$. Toutefois, l'approche proposée dans la présente invention peut s'étendre au cas d'un « shadowing » par bloc, c'est-à-dire d'un « shadowing » constant sur $T_s$ échantillons consécutifs.

On notera que le modèle de canal considéré englobe le canal de Rice sans « shadowing » comme cas particulier quand $m \to +\infty$.

On suppose que le canal de propagation est estimé, par exemple via l'utilisation de la séquence d'apprentissage également appelée séquence pilote. Ainsi un coefficient estimé du canal de propagation peut s'écrire comme suit :

$$\tilde{h}_i = h_i + b_i,$$

où $b_i \sim \mathcal{CN}(0, 2\sigma_b^2)$ représente un bruit d'estimation blanc complexe et gaussien, dont la variance $2\sigma_b^2$ peut être connue (par exemple via un processus de calibration du matériel radio) ou inconnue.

On notera que l'expression analytique de la vraisemblance de $\tilde{h}_i$ est fournie dans l'art antérieur et fait intervenir des fonctions cylindrique parabolique, rendant l'estimateur au sens du maximum de vraisemblance trop complexe à implémenter pour être utilisé en embarqué.

Ce modèle peut s'étendre comme suit au cas d'un canal sélectif en fréquence. La réponse impulsionnelle d'un canal sélectif en fréquence peut s'écrire $h = [h^0, ..., h^{L-1}]$, où $L$ représente le nombre de trajets du canal de propagation. A chaque instant i, chaque entrée $h_i^\ell$ du vecteur $h$ peut s'écrire

$$h_i^\ell = a^\ell c_i^\ell e^{j\theta_0^\ell} + R_i^\ell,$$

où les composantes LdV et nLdV sont indépendantes entre les différents trajets.

Aussi, on note l'estimation de la réponse impulsionnelle du canal comme suit $\tilde{h}_i = [\tilde{h}_i^0, ..., \tilde{h}_i^{L-1}]$.

Dans le cadre de la présente invention, on suppose qu'on dispose de $N$ estimations du canal de propagation pour estimer le facteur K de Rice. Afin d'adopter une notation commune pour le cas d'un canal plat et d'un canal sélectif en fréquence, on notera l'ensemble des estimations de canal disponibles comme $\mathfrak{h}$ := [ $\mathfrak{h}_1, ..., \mathfrak{h}_i, ..., \mathfrak{h}_N$], où $\mathfrak{h}_i = \tilde{h}_i$ dans le cas d'un canal plat en fréquence, et $\mathfrak{h}_i = \tilde{h}_i$ dans le cas d'un canal sélectif en fréquence. Le but est ici d'estimer les différentes valeurs de $K$ de chaque trajet notées $\hat{K}_0$, ..., $\hat{K}_L$ et potentiellement tout autre paramètre statistique du canal comme par exemple les différentes valeurs du paramètre m du « shadowing » notées $\hat{m}_0$, ..., $\hat{m}_L$, à partir de $\mathfrak{h}$.

On notera que le cas d'un canal sélectif en fréquence peut également se traiter en considérant chacun des L trajets comme un canal plat en fréquence.

Dans la suite de la description, on s'intéresse au cas d'un canal plat en fréquence.

Le procédé d'estimation comprend également une étape E3 de traitement de données intermédiaires **data1** obtenues à partir de l'ensemble des $N$ estimations $\mathfrak{h}_1$, ..., $\mathfrak{h}_i$, ... $\mathfrak{h}_N$. Les données intermédiaires **data1** proviennent d'un pré-traitement E2 de cet ensemble des $N$ estimations $\mathfrak{h}_1$, ..., $\mathfrak{h}_i$, ... $\mathfrak{h}_N$.

L'étape E3 de traitement des données intermédiaires **data1** est apte à prendre en compte une invariance par permutation de l'ensemble des $N$ estimations $\mathfrak{h}_1$, ..., $\mathfrak{h}_i$, ... $\mathfrak{h}_N$.

En effet, le problème d'estimation que l'on cherche à traiter est invariant par permutation, ce qui signifie que l'estimation des valeurs de $K$ de chaque trajet est la même quelle que soit la permutation des éléments de $\mathfrak{h}$. Mathématiquement, cette propriété peut s'écrire $\hat{K} = f(\mathfrak{h})$ $= f(\phi(\mathfrak{h}))$ où $f$ représente la procédure d'estimation, et $\phi(\mathfrak{h})$ est une permutation des éléments de $\mathfrak{h}$ qui peut s'écrire $\phi(\mathfrak{h}) = [\mathfrak{h}_{\phi_1}, ..., \mathfrak{h}_{\phi_N}]$ où $\phi_i \neq \phi_j$ $\forall i \neq j$, et $\phi_i \in [1,N]$ $\forall i \in [1,N]$.

On notera que le pré-traitement dans l'étape E2 qui fournit les données intermédiaires **data1** dans l'exemple de la figure 2 est différent du traitement appliqué pour prendre en compte l'invariance par permutation dans l'étape E3.

Préférentiellement, cette étape de prétraitement E2 est une normalisation de l'ensemble des N estimations $\mathfrak{h}_1$, ..., $\mathfrak{h}_i$, ... $\mathfrak{h}_N$.

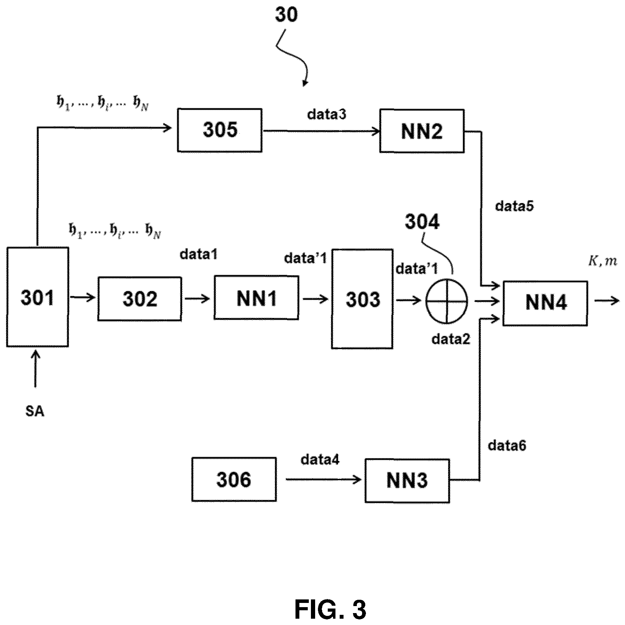

L'étape E6 est adaptée pour déterminer des paramètres statistiques $K,m$ à partir des données intermédiaires traitées **data2**. Ces données intermédiaires traitées **data2** sont ici obtenues en sortie de l'étape E3 de traitement des données intermédiaires **data1**. L'architecture A comprend plusieurs réseaux de neurones comme il est illustré à la figure 3.

Les données **data3** sont issues d'une étape E4 de détermination d'informations statistiques. Cette étape E4 permet une estimation grossière d'un facteur $K$ à partir de l'ensemble des $N$ estimations $\mathfrak{h}_1$, ..., $\mathfrak{h}_i$, ... $\mathfrak{h}_N$. Cette estimation du facteur $K$ va permettre de guider l'architecture A dans ses recherches.

Les données **data4** sont une variance du bruit d'estimation déterminée au cours de l'étape E5. Cette étape E5 correspond à une calibration du matériel radio réalisé en amont. Les données **data4** peuvent également contenir le nombre $N$ d'estimations du canal. En variante, les données **data4** contiennent la racine carrée du nombre $N$ d'estimations du canal. La transmission d'un tel nombre ou de la racine carrée de ce nombre permet d'améliorer le fonctionnement de l'architecture A de réseau de neurones.

Le procédé d'estimation de statistiques de la figure 2 va être détaillé à l'appui de la description d'un dispositif 30 d'estimation de statistiques illustré à la figure 3. Il est rappelé que l'on considère ici un canal plat en fréquence, c'est-à-dire Vi, $\mathfrak{h}_i = \tilde{h}_i$

Le dispositif 30 d'estimation de statistiques comprend :

- un module 301 de détermination de l'ensemble de $N$ estimations $\mathfrak{h}_1$, ..., $\mathfrak{h}_i$, ... $\mathfrak{h}_N$ ;
- un module 302 de pré-traitement dudit ensemble des $N$ estimations $\mathfrak{h}_1$, ..., $\mathfrak{h}_i$, ... $\mathfrak{h}_N$ ;
- un premier réseau de neurones NN1 ;
- un module 303 de stockage de données **data'1** issues du premier réseau de neurones NN1 ;
- un module 304 de sommation des données **data'1** issues du premier réseau de neurones NN1 ;
- une module 305 de détermination d'informations statistiques **data3** ;
- un second réseau de neurones NN2 ;
- un module 306 de détermination de la variance du bruit d'estimation **data4** ;
- un troisième réseau de neurones NN3 ;
- un quatrième réseau de neurones NN4.

On notera dès à présent que les réseaux de neurones NN1, NN2, NN3, NN4 sont ici des réseaux de neurones profonds.

Le module 301 est adapté pour fournir l'ensemble de N estimations $\mathfrak{h}_1$, ..., $\mathfrak{h}_i$, ... $\mathfrak{h}_N$. On note respectivement $\mathfrak{h}_{i,R}$ et $\mathfrak{h}_{i,I}$ la partie réelle et la partie imaginaire de chaque $\mathfrak{h}_i$.

Deux branches partent à partir de ce module 301 une branche du haut et une branche centrale.

La branche du haut correspond à un calcul d'informations statistiques **data3** par le module 305 à partir des données d'entrée $\mathfrak{h}_1$, ..., $\mathfrak{h}_i$, ... $\mathfrak{h}_N$. On calcule ainsi :

- les valeurs $\mu_{1,R}$ et $\mu_{1,I}$ qui correspondent respectivement aux moyennes empiriques de $\mathfrak{h}_{i,R}$ et $\mathfrak{h}_{i,I}$ ;
- une estimation $\hat{K}_{MoM}$ du paramètre $K$. Cette estimation peut être obtenue via la méthode des moments. Ces calculs correspondent à l'étape E4 de détermination d'informations statistiques de la figure 2.

On dispose ainsi de trois informations statistiques, qui sont fournies en entrée du second réseau de neurones NN2. Ce réseau de neurones NN2 comprend $S_2$ sorties et permet de fournir les données **data5** au quatrième réseau de neurones NN4.

Dans la branche du milieu, chaque $\mathfrak{h}_{i,R}$ et $\mathfrak{h}_{i,I}$ est fourni au module 302 de pré-traitement. Ce module 302 est adapté pour mettre en œuvre l'étape E2 de pré-traitement de la figure 2 et pour fournir ainsi en sortie les données **data1.** Ces données **data1** viennent alimenter l'entrée du premier réseau de neurones NN1 pour générer en sortie 2N vecteurs de $S_1$ entrées formant les données **data'1.** Dit autrement, on applique le premier réseau de neurones NN1 en parallèle aux $\mathfrak{h}_{i,R}$ et $\mathfrak{h}_{i,I}$ de chaque $\mathfrak{h}_i$. Ceci permet de prendre en compte un nombre d'entrée pouvant varier d'un scénario à l'autre. Les données **data'1** sont alors stockées dans le module 303 de stockage. Ces données **data'1** sont ensuite sommées par le module 304 de sommation au cours d'une étape de sommation des 2N vecteurs de $S_1$ entrées, ladite sommation étant commutative et applicable pour tout *N.*

Dans une branche du bas, la variance du bruit d'estimation des données **data4** est déterminée par le module 305 au cours de l'étape E5. Ces données **data4** sont données en entrées du troisième réseau de neurones NN3. Ces données **data4** contiennent également le nombre *N* d'estimations de canal ou la racine carrée de ce nombre *N*. Le troisième réseau de neurones comprend alors deux entrées, une pour la variance du bruit d'estimation et une pour le nombre *N* ou sa racine carrée et $S_3$ sorties pour constituer des données **data6.**

Les $S_1$ sorties du module 304, les $S_2$ sorties du second réseau de neurones NN2 et les $S_3$ sorties du troisième réseau de neurones NN3 sont concaténées ce qui conduit à un vecteur de taille $S_1 + S_2 + S_3$. Enfin, ce vecteur est passé en entrée du quatrième réseau de neurones NN4 pour fournir les paramètres statistiques *K,m.*

L'architecture A des réseaux de neurones NN1, NN2, NN3, NN4 est préalablement entraînée au cours d'une étape d'entraînement qui permet de mieux conditionner cette architecture.

Pour le premier réseau de neurones NN1 associé au module 304 de sommation, l'invariance par permutation du problème d'estimation est prise en compte dans la conception de ces éléments en vue de permettre d'accélérer drastiquement la procédure d'entraînement ainsi que d'améliorer la capacité de généralisation de l'algorithme. En effet, prendre en compte l'invariance par permutation permet de ne pas avoir à présenter au premier réseau de neurones NN1 chaque permutation de chaque élément de la base d'apprentissage.

Le nombre *N* d'entrées de $\mathfrak{h}$ à dispositions pour estimer le paramètre *K* du canal de Rice peut varier d'un scénario à l'autre (par exemple en fonction de la quantité de ressources allouée à l'émetteur qui va conditionner le nombre d'estimation de canal à disposition), et ainsi il est souhaitable de disposer d'une approche permettant d'effectuer un apprentissage unique prenant en compte différentes valeurs de *N*. Ceci permet d'éviter d'effectuer un apprentissage différents pour chaque valeur de *N* possible dans le premier réseau de neurones, ce qui alourdirait la procédure d'entrainement, et nécessiterait de devoir embarquer autant de premiers réseaux de neurones que de valeurs de *N* envisagées.

L'étape d'entraînement du premier réseau de neurones NN1 comprend une première étape de pré-conditionnement sur des données de synthèse et une seconde étape d'ajustement sur des données issues d'au moins une campagne de mesures.

L'apprentissage sur des données de synthèses présente deux avantages à savoir d'une part qu'il est possible de générer des bases de données de très grandes tailles, et d'autres part que les labels des données sont parfaitement connus.

L'apprentissage sur des données issues d'au moins une campagne de mesures a pour avantage qu'on limite le risque d'apprendre des artefacts de simulations non représentatifs d'une communication réelle. Afin d'obtenir les labels il est possible d'utiliser des estimateurs conventionnels issus de la littérature. En variante, il est possible d'effectuer des communications réelles sur le canal de propagation et d'en mesurer les performances en termes de taux d'erreur paquet ou taux d'erreur bits afin d'en déduire la vraie valeur du facteur *K* en effectuant un « mapping » entre une courbe d'erreur théorique et une courbe d'erreur mesurée.

L'invention apporte ainsi les avantages suivants :

- l'utilisation du « deep learning » pour l'estimation du facteur *K* du canal de Rice en présence de « shadowing » ;
- la sélection d'une architecture de réseaux de neurones bien adaptée au problème traité basée sur l'identification de propriétés et de contraintes particulières de ce problème ;
- une insertion d'informations statistiques supplémentaires en entrée de l'architecture de réseau de neurones ;
- une procédure d'entraînement en deux temps dans un contexte d'estimation des statistiques du canal de propagation.

La solution proposée par l'invention peut s'adapter à tout autre modèle de canal de propagation pour lequel l'utilisation d'outils d'estimation conventionnels est trop complexe et/ou dont les performances ne sont pas suffisantes.

Le procédé d'estimation de statistiques du canal de propagation peut avantageusement s'implémenter dans une station de transmission de base d'un réseau de communication sans fil.

## Revendications

1. Procédé d'estimation de statistiques d'un canal de propagation (10), ledit canal de propagation (10) permettant une transmission d'un signal de communication entre un nœud émetteur ($N_E$) et un nœud récepteur ($N_R$), ledit canal de propagation (10) étant un canal de Rice en présence de masquage, ledit signal de communication comprenant une séquence d'apprentissage (SA), ledit procédé d'estimation comportant :

   - une étape (E1) de détermination d'un ensemble de $N$ estimations ($\mathfrak{h}_1$, ..., $\mathfrak{h}_i$, ... $\mathfrak{h}_N$) du canal de propagation (10) à partir de ladite séquence d'apprentissage (SA) transmise $N$ fois par le nœud émetteur ($N_E$);
   - une étape de pré-traitement (E2) dudit ensemble des $N$ estimations ($\mathfrak{h}_1$, ..., $\mathfrak{h}_i$, ... $\mathfrak{h}_N$) pour obtenir des données intermédiaires **(data1)** ;
   - une étape (E3) de traitement des données intermédiaires **(data1)** pour obtenir des données intermédiaires traitées **(data2),** ladite étape (E3) de traitement étant apte à prendre en compte une invariance par permutation desdites données intermédiaires **(data1)** quel que soit $N$ ; - une étape (E6) de détermination de paramètres statistiques ($K, m$) à partir des données intermédiaires traitées **(data2)** ;

   ladite étape (E3) de traitement des données intermédiaires **(data1)** et ladite étape (E6) de détermination des paramètres statistiques ($K,m$) étant réalisées par une architecture (A) d'au moins un réseau de neurones (NN1, NN2, NN3, NN4).

2. Procédé d'estimation selon la revendication 1, dans lequel l'étape (E3) de traitement des données intermédiaires **(data1)** comprend :

   - une étape de traitement par un premier réseau de neurones (NN1) ayant une entrée et $S_1$ sorties, ledit premier réseau de neurones (NN1) étant apte à recevoir en entrée des données intermédiaires obtenues à partir d'une partie réelle ($\mathfrak{h}_{i,R}$) et d'une partie imaginaire ($\mathfrak{h}_{i,I}$) de chaque estimation ($\mathfrak{h}_i$) du canal de propagation (10) et à fournir en sortie $2N$ vecteurs de $S_1$ entrées **(data'1)** ;
   - une étape de sommation des $2N$ vecteurs de $S_1$ entrées **(data'1),** ladite sommation étant commutative et applicable pour tout $N$.

3. Procédé d'estimation selon l'une des revendications 1 ou 2, dans lequel le pré-traitement (E2) est une normalisation de l'ensemble des $N$ estimations ($\mathfrak{h}_1$, ..., $\mathfrak{h}_i$, ... $\mathfrak{h}_N$).

4. Procédé d'estimation selon l'une quelconque des revendications 1 à 3, dans lequel ledit procédé d'estimation comprend une étape (E4) de détermination d'informations statistiques **(data3)** à partir de l'ensemble des $N$ estimations ($\mathfrak{h}_1$, ..., $\mathfrak{h}_i$, ... $\mathfrak{h}_N$), lesdites informations statistiques **(data3)** étant destinées à être transmises à l'architecture (A) de réseau de neurones.

5. Procédé d'estimation selon la revendication 4, dans lequel l'étape (E4) de détermination d'informations statistiques comprend une estimation d'un facteur K du canal de propagation (10).

6. Procédé d'estimation selon l'une quelconque des revendications 4 ou 5, dans lequel ledit procédé d'allocation de ressources comprend une étape (E5) de détermination d'une variance du bruit d'estimation **(data4),** ladite variance du bruit d'estimation étant destinée à être transmise à l'architecture (A), ladite variance du bruit étant associée au nombre $N$ d'estimations ou à la racine carré dudit nombre N.

7. Procédé d'estimation selon l'une quelconque des revendications 1 à 6, dans lequel l'architecture (A) comprend quatre réseaux de neurones (NN1, NN2, NN3, NN4).

8. Procédé d'estimation selon l'une quelconque des revendications 1 à 7, dans lequel l'architecture (A) est préalablement entraînée au cours d'une étape d'entraînement, ladite étape d'entraînement comprenant une première étape de pré-conditionnement sur des données de synthèse et une seconde étape d'ajustement sur des données issues d'au moins une campagne de mesures.

9. Procédé d'estimation selon l'une quelconque des revendications 1 à 8, dans lequel le canal de propagation (10) est un canal plat en fréquence.

10. Procédé d'estimation selon l'une quelconque des revendications 1 à 8, dans lequel le canal de propagation (10) est un canal sélectif en fréquence.

11. Dispositif pour l'estimation de statistiques dans un réseau de communication (1) pour la mise en œuvre d'un procédé d'estimation de statistiques d'un canal de propagation (10) selon l'une quelconque des revendications 1 à 10, ledit canal de propagation (10) permettant une transmission d'un signal de communication entre un nœud émetteur ($N_E$) et un nœud récepteur ($N_R$), ledit canal de propagation (10) étant un canal de type canal de Rice en présence de masquage.

**Patentansprüche**

1. Verfahren zur Schätzung von Statistiken eines Ausbreitungskanals (10), wobei der Ausbreitungskanal (10) eine Übertragung eines Kommunikationssignals zwischen einem Sendeknoten ($N_E$) und einem Empfangsknoten ($N_R$) ermöglicht, wobei der Ausbreitungskanal (10) ein Rice-Kanal bei Vorhandensein von Maskierung ist, wobei das Kommunikationssignal eine Lernsequenz (SA) umfasst, wobei das Schätzverfahren Folgendes umfasst:

   - einen Schritt (E1) zur Bestimmung eines Satzes von $N$ Schätzungen ($\mathfrak{h}_1, ..., \mathfrak{h}_i, ... \mathfrak{h}_N$) des Ausbreitungskanals (10) aus der Lernsequenz (SA), die $N$ mal vom Sendeknoten ($N_E$) übertragen wurde;
   - einen Schritt zur Vorverarbeitung (E2) des Satzes von $N$ Schätzungen ($\mathfrak{h}_1, ..., \mathfrak{h}_i, ... \mathfrak{h}_N$), um Zwischendaten **(data1)** zu erhalten;
   - einen Schritt (E3) zur Verarbeitung der Zwischendaten **(data1),** um verarbeitete Zwischendaten **(data2)** zu erhalten, wobei der Schritt (E3) zur Verarbeitung geeignet ist, eine Invarianz durch Permutation der Zwischendaten **(data1)** unabhängig von $N$ zu berücksichtigen; - einen Schritt (E6) zur Bestimmung von statistischen Parametern ($K, m$) aus den verarbeiteten Zwischendaten **(data2);**

   wobei der Schritt (E3) zur Verarbeitung der Zwischendaten **(data1)** und der Schritt (E6) zur Bestimmung der statistischen Parameter ($K,$ m) durch eine Architektur (A) aus mindestens einem neuronalen Netz (NN1, NN2, NN3, NN4) durchgeführt werden.

2. Schätzverfahren nach Anspruch 1, wobei der Schritt (E3) zur Verarbeitung der Zwischendaten **(data1)** umfasst:

   - einen Schritt zur Verarbeitung durch ein erstes neuronales Netz (NN1) mit einem Eingang und $S_1$ Ausgängen, wobei das erste neuronale Netz (NN1) geeignet ist, am Eingang Zwischendaten zu empfangen, die aus einem Realteil ($\mathfrak{h}_{i,R}$) und einem Imaginärteil ($\mathfrak{h}_{i,I}$) jeder Schätzung ($\mathfrak{h}_i$) des Ausbreitungskanals (10) erhalten werden, und am Ausgang $2N$ Vektoren von $S_1$ Eingängen **(data'1)** zu liefern;
   - einen Schritt zur Summierung der $2N$ Vektoren von $S_1$ Eingängen **(data'1),** wobei die Summierung kommutativ und für jede $N$ anwendbar ist.

3. Schätzverfahren nach einem der Ansprüche 1 oder 2, wobei die Vorverarbeitung (E2) eine Normalisierung des Satzes der $N$ Schätzungen ($\mathfrak{h}_1, ..., \mathfrak{h}_i, ... \mathfrak{h}_N$) ist.

4. Schätzverfahren nach einem der Ansprüche 1 bis 3, wobei das Schätzverfahren einen Schritt (E4) zur Bestimmung von statistischen Informationen **(data3)** aus dem Satz der $N$ Schätzungen ($\mathfrak{h}_1, ..., \mathfrak{h}_i, ... \mathfrak{h}_N$) umfasst, wobei die statistischen Informationen **(data3)** dazu bestimmt sind, an die Architektur (A) des neuronalen Netzes übertragen zu werden.

5. Schätzverfahren nach Anspruch 4, wobei der Schritt (E4) zur Bestimmung von statistischen Informationen eine Schätzung eines Faktors $K$ des Ausbreitungskanals (10) umfasst.

6. Schätzverfahren nach einem der Ansprüche 4 oder 5, wobei das Verfahren zur Ressourcenzuteilung einen Schritt (E5) zur Bestimmung einer Varianz des Schätzungsrauschens **(data4),** wobei die Varianz des Schätzungsrauschens dazu bestimmt ist, an die Architektur (A) übertragen zu werden, wobei die Varianz des Rauschens mit der Anzahl N der Schätzungen oder der Quadratwurzel der Anzahl N assoziiert ist.

7. Schätzverfahren nach einem der Ansprüche 1 bis 6, wobei die Architektur (A) vier neuronale Netze (NN1, NN2, NN3, NN4) umfasst.

8. Schätzverfahren nach einem der Ansprüche 1 bis 7, wobei die Architektur (A) zuvor in einem Trainingsschritt trainiert wird, wobei der Trainingsschritt einen ersten Schritt der Vorkonditionierung auf Synthesedaten und einen zweiten Schritt der Anpassung auf Daten aus mindestens einer Messkampagne umfasst.

9. Schätzverfahren nach einem der Ansprüche 1 bis 8, wobei der Ausbreitungskanal (10) ein frequenzflacher Kanal ist.

10. Schätzverfahren nach einem der Ansprüche 1 bis 8, wobei der Ausbreitungskanal (10) ein frequenzselektiv Kanal ist.

11. Vorrichtung zur Schätzung von Statistiken in einem Kommunikationsnetz (1) zur Durchführung eines Verfahrens zur Schätzung von Statistiken eines Ausbreitungskanals (10) nach einem der Ansprüche 1 bis 10, wobei der Ausbreitungskanal (10) eine Übertragung eines Kommunikationssignals zwischen einem Sendeknoten ($N_E$) und einem Empfangsknoten ($N_R$) ermöglicht, wobei der Ausbreitungskanal (10) ein Kanal vom Typ Rice-Kanal bei Vorhandensein von Maskierung ist.

**Claims**

1. Estimation method for estimating statistics of a propagation channel (10), said propagation channel (10) allowing transmission of a communication signal between a transmitting node ($N_E$) and a receiving node ($N_R$), said propagation channel (10) being a Rician channel in the presence of masking, said communication signal comprising a learning sequence (LS), said estimation method comprising:

   - a step (E1) of determining a set of $N$ estimations ($\hbar_1$ ... , $\hbar_i$, ... $\hbar_N$) of the propagation channel (10) from said learning sequence (LS) transmitted $N$ times by the transmitting node ($N_E$);
   - a step of pre-processing (E2) said set of $N$ estimations ($\hbar_1$, ..., $\hbar_i$, ... $\hbar_N$) to obtain intermediate data **(data1);**
   - a step (E3) of processing the intermediate data **(data1)** to obtain processed intermediate data **(data2),** said processing step (E3) being able to take account of an invariance by permutation of said intermediate data **(data1)** whatever $N$; a step (E6) of determining the statistical parameters (K, $m$) from the processed intermediate data **(data2);**

   said step (E3) of processing intermediate data **(data1)** and said step (E6) of determining statistical parameters ($K$, $m$) being carried out by an architecture (A) of at least one neural network (NN1, NN2, NN3, NN4).

2. Estimation method according to claim 1, wherein the step (E3) of processing intermediate data **(data1)** comprises:

   - a step of processing by a first neutral network (NN1) having an input $S_1$ outputs, said first neutral network (NN1) being able to receive, at the input, intermediate data obtained from a real part ( $\hbar_{i,R}$ ) and an imaginary part ( $\hbar_{i,I}$) of each estimation ($\hbar_i$) of the propagation channel (10) and to provide at the output $2N$ input vectors

$S_1$ **(data'1);**
- a step of summing the $2N$ input vectors $S_1$ **(data'1),** said summing being commutative and applicable for all $N$.

3. Estimation method according to any one of claims 1 or 2, wherein the pre-processing (E2) is a standardisation of the set of $N$ estimations (

   $\hbar_1, ... , \hbar_i, ... \hbar_N$).

4. Estimation method according to any one of claims 1 to 3, wherein said estimation method comprises a step (E4) of determining statistical information **(data3)** from the set of $N$ estimations (

   $\hbar_1 ... , \hbar_i, ... \hbar_N$), said statistical information **(data3)** being intended to be transmitted to the neural network architecture (A).

5. Estimation method according to claim 4, wherein the step (E4) of determining statistical information comprises an estimation of a factor $K$ of the propagation channel (10).

6. Estimation method according to any one of claims 4 or 5, wherein said resource allocation method comprises a step (E5) of determining a variance of the estimation noise **(data4),** said variance of the estimation noise being intended to be transmitted to the architecture (A), said variance of the noise being associated with the number $N$ of estimations or with the square root of said number N.

7. Estimation method according to any one of claims 1 to 6, wherein the architecture (A) comprises four neural networks (NN1, NN2, NN3, NN4).

8. Estimation method according to any one of claims 1 to 7, wherein the architecture (A) is trained beforehand during a training step, said training step comprising a first preconditioning step on synthesis data and a second adjustment step on data coming from at least one measuring campaign.

9. Estimation method according to any one of claims 1 to 8, wherein the propagation channel (10) is a flat frequency channel.

10. Estimation method according to any one of claims 1 to 8, wherein the propagation channel (10) is a selective frequency channel.

11. Estimation device for estimating statistics in a communication network (1) for implementing an estimation method for estimating statistics of a propagation channel (10) according to any one of claims 1 to 10, said propagation channel (10) allowing transmission of a communication signal between a transmitting node ($N_E$) and a receiving node ($N_R$), said propagation channel (10) being a Rician channel in the presence of masking.

**FIG. 1**

**FIG. 2**

FIG. 3

**RÉFÉRENCES CITÉES DANS LA DESCRIPTION**

*Cette liste de références citées par le demandeur vise uniquement à aider le lecteur et ne fait pas partie du document de brevet européen. Même si le plus grand soin a été accordé à sa conception, des erreurs ou des omissions ne peuvent être exclues et l'OEB décline toute responsabilité à cet égard.*

**Documents brevets cités dans la description**

- CN 106850109 B

- EP 3503649 A

**Littérature non-brevet citée dans la description**

- **A. ABDI** ; **W. C. LAU** ; **M. -. ALOUINI** ; **M. KAVEH**. A new simple model for land mobile satellite channels: first- and second-order statistics. *IEEE Transactions on Wireless Communications*, May 2003, vol. 2 (3), 519-528
- **C. TEPEDELENLIOGLU et al.** The ricean K factor: Estimation and performance analysis. *IEEE Transactions on Wireless Communications*, 01 May 2003, vol. 24 (5)
- **G. GIUNTA** ; **C. HAO** ; **D. ORLANDO**. Estimation of Rician K-Factor in the Presence of Nakagamim Shadowing for the LoS Component. *IEEE Wireless Communications Letters*, August 2018, vol. 7 (4), 550-553

- **X. LETURC** ; **P. CIBLAT** ; **C. J. LE MARTRET**. Estimation of the Ricean $K$ Factor in the Presence of Shadowing. *IEEE Communications Letters*, January 2020, vol. 24 (1), 108-112
- **M. ALYMANI** ; **M. H. ALHAZMI** ; **A. ALMARHABI** ; **H. ALHAZMI** ; **A. SAMARKANDI** ; **Y. -D. YAO**. Rician K-Factor Estimation Using Deep Learning. *29th Wireless and Optical Communications Conference (WOCC)*, 2020
- **G. LU** ; **Q. ZHANG** ; **X. ZHANG** ; **F. SHEN** ; **F. QIN**. CNN Based Rician K factor estimation for non-stationary industrial fading channel. *IEEE Global Conference on Signal and Information Processing (GlobalSIP)*, 2018
- **KUN WANG**. Ricean K-factor Estimation based on Channel Quality Indicator in OFDM Systems using Neural Network. *arxiv*, 2018